# EUROPÄISCHE PATENTSCHRIFT

(11) **EP 0 932 050 B1**
(45) Veröffentlichungstag und Bekanntmachung des Hinweises auf die Patenterteilung: **11.08.2004**
(21) Anmeldenummer: 98123164.0
(22) Anmeldetag: 04.12.1998
(51) Int. Cl.: G01S 7/481, G01S 17/08, G01S 17/50, G01B 9/02

(54) **Optischer Aufbau zur berührungslosen Schwingungsmessung**
Optical assembly for contactless vibration measurement
Assemblage optique pour la mesure de vibrations sans contact

(30) Priorität: 21.01.1998 DE 19801959
(43) Veröffentlichungstag der Anmeldung: 28.07.1999
(73) Patentinhaber: Polytec GmbH, 76337 Waldbronn (DE)
(72) Erfinder: Lewin, Andrew Charles, Dr., 76337 Waldbronn-Etzenrot (DE)
(74) Vertreter: Brommer, Hans Joachim, Dr.-Ing.

(56) Entgegenhaltungen:
- EP-A- 0 552 415
- DE-A- 3 710 041
- US-A- 4 652 129
- US-A- 5 371 587

## Beschreibung

Die Erfindung betrifft ein Laserinterferometer zur berührungslosen, optischen Vermessung eines Objektes, insbesondere zur Weg- und/oder Schwingungsmessung, mit mindestens einem Messstrahl und mindestens einem Referenzstrahl, wobei die Vorrichtung ein Mittel zum Erzeugen einer zeitlich konstanten Frequenzverschiebung aufweist.

Laserinterferometer stellen ideale Messanordnungen zur hochauflösenden Weg- bzw. Schwingungsmessung dar. Die Messungen finden dabei rein optisch, also berührungslos, statt. Dabei wird kohärentes Licht, das bevorzugt von einem Laser erzeugt wird, in einen Mess- und in einen Referenzstrahl aufgespalten. Der Messstrahl wird für sich allein in einem sogenannten Messarm zu einem Messobjekt geführt, von diesem reflektiert und dann mit dem Referenzstrahl überlagert. Es ergeben sich Interferenzmuster, die außerordentlich empfindlich von der Länge des Messarmes abhängen.

Zur vorzeichenrichtigen Ermittlung von Schwingungen haben sich allgemein sogenannten Heterodyne-Interferometer durchgesetzt. Bei diesen sind Messstrahl und Referenzstrahl in der Frequenz gegeneinander verschoben. Diese Verschiebung lässt sich entweder durch einen optoakustischen Modulator, insbesondere eine Bragg-Zelle, erzeugen oder durch das Durchstimmen einer Laserdiode in Verbindung mit einer Laufzeitdifferenz zwischen Mess- und Referenzstrahl. Bei den beschriebenen, in der Regel verwendeten Zweistrahl-Anordnungen, wie Michelson oder Mach Zehnder, von denen der Oberbegriff des Anspruches 1 ausgeht, ist allerdings eine große Anzahl von optischen Bauelementen notwendig, so daß die Interferometer mit erheblichem Aufwand in vier oder mehr Freiheitsgraden einzustellen und zu justieren sind.

Außerdem läßt die Empfindlichkeit der bekannten Laserinterferometer zu wünschen übrig, da in der Regel ein Lichtleiter verwendet wird, der Teil des Meßarmes ist und somit die Anordnung gegenüber Vibrationen und Einstreuung in den Lichtleiter empfindlich macht. Dieses Rauschen kann insbesondere bei der Messung an schwach reflektierenden Oberflächen unbehandelter Meßobjekte nachteilig sein.

Von R.I. Laming et al. "A Practical All-Fibre Laser Vibrometer", Experimental Techniques March/April 1990, wird deshalb ein Interferometer vorgeschlagen, bei dem das Licht erst am Ende des Lichtleiters in Meß- und Referenzstrahl aufgeteilt wird. Ein solcher Aufbau wird durch den Verzicht auf eine Bragg-Zelle und den Einsatz eines durchstimmbaren Halbleiterlasers möglich.

Nachteil dieser Konstruktion ist allerdings, daß die Frequenzverschiebung durch die Modulation des Injektionsstromes im Halbleiterlaser nur für relativ geringe Frequenzen möglich ist und der Bereich der meßbaren Schwingungsfrequenzen und schnellen Geschwindigkeiten dadurch stark eingeschränkt wird. Weiterhin fallen schwach reflektierende Oberflächen bei einer durch die Injektionsstrom-Modulation hervorgerufenen Intensitätsschwankung des Laserlichtes wegen Störungen in der Amplitudenmodulation oftmals aus dem Meßbereich heraus. Schließlich hat der Einsatz eines Halbleiterlasers gegenüber einem Gaslaser generell einige Nachteile, da die geringe Kohärenzlänge des vom Halbleiterlaser emittierten Lichtes im Interferometer Phasenrauschen verursacht, welches linear mit dem Weglängenunterschied zwischen Meß- und Referenzarm zunimmt.

US-A-4 652 129 beschreibt ein Interferometer wie im Oberbegriff von Anspruch 1 dargestellt.

In der US-A-5 371 587 wird ein optischer Entfernungsmesser mit einem Laserinterferometer beschrieben, wobei das Laserinterferometer mindestens einen Messstrahl und mindestens einen Referenzstrahl enthält, der vom Laser ausgehende Strahl einen Lichtleiter durchläuft und die Aufteilung in Messstrahl und Referenzstrahl am Austrittsende des Lichtleiters erfolgt. Die hier offenbarte Vorrichtung dient zum Erfassen von Absolutentfernungen, also zur statischen Vermessung von Objektoberflächen. Es ist bei diesem Aufbau nicht vorgesehen, den Messstrahl oder den Referenzstrahl zur Bildung eines Heterodyne-Interferometers zeitlich konstant in seiner Frequenz zu verschieben, so dass eine Schwingungsmessung mit diesem bekannten Aufbau kaum möglich ist.

Davon ausgehend besteht die Aufgabe der vorliegenden Erfindung darin, die vorgenannten Nachteile zu beseitigen, insbesondere ein Laserinterferometer anzugeben, das sich durch eine erhöhte Empfindlichkeit, ein geringeres Rauschen und einen erheblich verminderten Justageaufwand auszeichnet. Weiterhin soll ein Interferometerbetrieb nicht nur mit Halbleiterlasern möglich sein und schließlich soll sich das Interferometer für den Einsatz im medizinischen Bereich eignen.

Diese Aufgabe wird erfindungsgemäß dadurch gelöst, daß entweder der Meß- oder der Referenzstrahl das Mittel zum Erzeugen der zeitlich konstanten requenzverschiebung mindestens zweimal durchläuft, so daß die Frequenzverschiebung des Strahles vergrößert wird.

Mit Durchlaufen" ist hier jede Art von Wechselwirkung mit dem Mittel zum Erzeugen der Frequenzverschiebung gemeint, so etwa auch eine Reflektion.

Durch das zweimalige Durchlaufen des Mittels zur Frequenzverschiebung vermindert sich der optische Aufwand ganz erheblich, da bei beiden Durchläufen derselbe optische Weg benutzt werden kann und dadurch große Teile der bislang benötigten Spiegel- und Linsenanordnungen überflüssig werden. Weiterhin ergibt sich beim zweimaligen Durchlaufen der zusätzliche Vorteil, daß der Laserstrahl zweimal in der Frequenz verschoben wird. So wird insgesamt eine betragsmäßig größere Frequenzverschiebung erzielt, was die meßbare Geschwindigkeit steigert und den Meßbereich zu noch höheren Schwingungsfrequenzen hin erweitert.

Es ist günstig, wenn der in der Frequenz verschobene Strahl der Meßstrahl ist, denn so erhält man eine sehr einfache Anordnung, wenn man den Meßstrahl senkrecht auf das Meßobjekt treffen läßt und dieser in sich selbst zurückreflektiert wird. Dann wird der Strahl das erste Mal auf seinem Weg zum Meßobjekt und ein weiteres Mal auf seinem Rückweg das Mittel zum Erzeugen der Frequenzverschiebung durchlaufen.

Als Mittel zum Erzeugen der Frequenzverschiebung läßt sich vorteilhaft eine Bragg-Zelle einsetzen, wie sie sich in der Praxis vielfach bewährt hat.

Oft muß ein Meßobjekt unter beengten Platzverhältnissen vermessen werden. Dafür ist es günstig, wenn der Laser in einiger Entfernung zum Meßobjekt plaziert werden kann und das vom Laser kommende Licht über einen Lichtleiter zu einem Meßkopf geführt wird. Vom Meßkopf wird das Licht dann auf das Meßobjekt projiziert.

In einer solchen Anordnung hat sich als günstigster Platz für das Mittel zum Erzeugen einer Frequenzverschiebung der Bereich zwischen Lichtielter und Meßobjekt herausgestellt, in der Regel also der Meßkopf.

Eine besonders vorteilhafte Weiterbildung der Erfindung besteht darin, daß die Aufteilung des Lichtes in Meßstrahl und Referenzstrahl nach Durchlaufen zumindest eines Teiles des Lichtleiters erfolgt. Dadurch, daß Meßund Referenzstrahl möglichst lange gemeinsam durch den Lichtleiter geführt werden, werden beide in exakt gleicher Art und Weise beeinflußt, so daß sich die Störungen aufheben und das Meßergebnis nicht beeinträchtigt wird. Weiterhin wird durch den beschriebenen Aufbau die Länge des verbleibenden Meßarmes reduziert, was insofern vorteilhaft ist, da insbesondere das Licht aus Laserdioden keine große Kohärenzlänge aufweist und damit zu erhöhtem Phasenrauschen im Interferometer führt. Dieses Phasenrauschen wirkt sich um so stärker aus, je größer die absolute Längendifferenz zwischen Meßarm und Referenzarm des Interferometers ist.

Vorteilhafterweise erfolgt die Aufteilung von Meßstrahl und Referenzstrahl am Austrittsende des Lichtleiters, indem der Meßstrahl aus dem Lichtleiter austritt, während der Referenzstrahl von Lichtleiterende in den Lichtleiter zurückreflektiert wird. Im einfachsten Fall wird der ohnehin am Lichtleiter-Luft-Übergang reflektierte Anteil als Referenzstrahl verwendet. Dadurch entfallen alle bisher notwendigen Maßnahmen, um diesen Anteil zu verringern, der etwa 4 % der gesamten Intensität ausmacht und sich bislang störend bemerkbar machte, weil dieser Anteil größer als der des Meßsignals wurde.

Es ist aber auch denkbar, die Intensität des Referenzstrahles zu erhöhen, etwa durch zusätzliches Verspiegeln des Austrittsendes.

Das Merkmal der Aufteilung am Austrittsende erlaubt eine besonders einfache Montage, da hier sonst notwendige, aufwendige Justierarbeiten entfallen. Der Referenzstrahl wird praktisch von selbst zurückgeführt.

Neben einem Aufteilen am Austrittsende ist natürlich ein Aufteilen dahinter oder ein Trennen in Meß- und Referenzstrahl im Lichtleiter denkbar, allerdings weniger vorteilhaft. Im Lichtleiter ließe sich dieses z. B. durch einen bei der Herstellung der Faseroptik erzeugten Sprung des Brechungsindex an einem definierten Punkt des Lichtleiters erzeugen.

Der Meßarm wird besonders kurz und damit besonders unempfindlich gegenüber ungewollten Beeinträchtigungen von außen, wenn die Aufteilung in Meß- und Referenzstrahl erst im Meßkopf erfolgt.

Die gewünschte Unempfindlichkeit gegenüber Störungen läßt sich noch weiter vergrößern, wenn Meß- und Referenzstrahl nicht nur auf dem Hinweg, sondern auch auf dem Rückweg zusammen geführt werden. Dazu werden sie vorteilhafterweise von einem gemeinsamen Lichtleiter zu einem Detektor des Interferometers geleitet, mit dem die Veränderungen des Interferenzmusters gemessen werden. Zweckmäßigerweise ist dieser Lichtleiter mit dem eingangs genannten Lichtleiter identisch, so daß man keinen zweiten Lichtleiter benötigt, der mit dem ersten Lichtleiter verkoppelt werden müßte. Vielmehr treten Meß- und Referenzstrahl jeweils an den gleichen Enden des Lichtleiters ein bzw. aus - auch was die Zuführung zum Detektor angeht.

Um eine identische, sich aufhebende Beeinflussung durch äußere Störungen von Meß- und Referenzstrahl im Lichtleiter zu erhalten, durchlaufen diese den Lichtleiter vorteilhaft mit der gleichen Polarisation, insbesondere sind beide identisch linear polarisiert. Dies gilt sowohl für den Hin- als auch für den Rückweg durch den oder die Lichtleiter.

Zur Steigerung der Meßempfindlichkeit enthält die Vorrichtung vorzugsweise ein Isolatorsystem, das verhindert, daß Licht in den Laser zurückgekoppelt wird, sondern dafür sorgt, daß die gesamte und nicht nur ein Teil der Signalleistung zum Detektor geleitet wird. Das Isolatorsystem weist einen Faraday-Rotator und ein polarisationsdiskriminierendes Element, insbesondere einen Polarisationsstrahlteiler, auf.

Durch die Verwendung des Lichtleiters und dessen Unempfindlichkeit gegenüber Vibrationen eignet sich die erfindungsgemäße Vorrichtung besonders gut für einen Multiplex-Betrieb. Dabei werden mehrere Lichtleiter mit jeweils einem Meßkopf eingesetzt, wobei die Lichtleiter durchaus länger als üblich ausfallen können und zu den unterschiedlichsten Stellen eines oder mehrerer Meßobjekte verlegbar sind. Man braucht dann nur noch eine einzige Steuereinrichtung mit Laser und Detektor, was Kosten spart. Diese Steuereinrichtung weist sinnvollerweise eine Zuordnungseinrichtung zum Zuordnen und Einkoppeln des Laserlichtes in die unterschiedlichen Lichtleiter auf.

Die vorstehend beschriebene Vorrichtung eignet sich insbesondere für ein Verfahren zur optischen Vermessung eines Objektes, bei dem zur Optimierung der Position eines Implantates, insbesondere einer Hörhilfe, am oder im menschlichen oder tierischen Körper der Meßstrahl in den Strahlengang eines Operationsmikroskopes eingekoppelt wird. Damit ist ausdrücklich eine in vivo-Positionierung gemeint. Das heißt eine Positionierung während der Operation an einem Tier oder Menschen.

Hierbei machen sich die Vorteile der eingangs erwähnten erfindungsgemäßen Vorrichtung besonders bemerkbar, da die Implantate in der Regel nicht extra verspiegelt werden können und man wegen ihrer naturgemäß geringen Reflexivität auf eine hohe Empfindlichkeit der Meßanordnung angewiesen ist. Außerdem sind moderne Operationsmikroskope oftmals für einen möglichst großen Freiraum des Arztes bei der Operation außerordentlich beweglich an langen Führungsarmen aufgehängt. Um dieser Beweglichkeit bei der interferometrischen Messung folgen zu können, muß man sehr lange Lichtleiter verwenden, deren Empfindlichkeit gegenüber Erschütterungen durch die erfindungsgemäße Vorrichtung eliminiert wird.

Während der gewichtige Teil des Interferometers mit Präzisionslaser und hochempfindlichem Detektor bequem abseits aufgebaut werden kann, wird das Licht über den flexiblen Lichtleiter zum verschwenkbaren Teil des Mikroskops geführt und hier so in den Strahlengang eingekoppelt, daß der Arzt bei der Operation einen Teil des vom Implantat reflektierten Laserlichtes als Meßpunkt erkennen und damit den Meßort festlegen kann.

Es ist dabei nicht unbedingt notwendig, daß das Laserlicht auch das Linsensystem des Mikroskops durchläuft, das Licht kann der Einfachheit halber auch zwischen Mikroskop und Implantat in den Strahlengang des Mikroskops eingekoppelt werden.

Alternativ zur angesprochenen Vorrichtung mit Präzisionsgaslaser und Lichtleiter kann z. B. auch ein miniaturisiertes Interferometer mit Halbleiterlaser vollständig am Operationsmikroskop angebracht sein; um das Verfahren durchzuführen.

Das Verfahren ist besonders geeignet zur Untersuchung mechanisch bedingter Schädigungen von Hörorganen, zur Analyse derselben und zur Ermittlung geeigneter Positionen von Implantaten und aktiven Hörhilfen und Hörorganen. Deren Funktionskontrolle konnte bisher nur sehr rudimentär vorgenommen werden. In einer Weiterbildung des

Verfahrens wird nun das Implantat während der Operation vorzugsweise an unterschiedlichen Positionen in Schwingungen versetzt. Diese Schwingungen werden mit dem Interferometer vermessen, so daß die ideale Einbauposition des Implantates festgestellt werden kann.

Für eine möglichst realistische Funktionskontrolle werden die Schwingungen durch Schall erzeugt, der über die noch intakten Elemente des Hörapparates des Menschen oder Tieres als Schwingung an das Implantat weitergeleitet wird.

Der Meßstrahl des Interferometers wird zweckmäßigerweise durch eine Operationsöffnung in den Kopf bzw. Körper des Menschen oder Tieres eingeleitet.

In Weiterbildung der eingangs beschriebenen Vorrichtung läßt sich diese auch als Mikrofon einsetzen. Mikrofone von sehr hoher Qualität haben das Problem, daß die von der Membran korrekt aufgenommene Schwingung durch das Übertragungssystem (magnetisch oder kapazitiv) verfälscht werden. Ein Laservibrometer hat aber über einen sehr weiten Bereich einen flachen Frequenzgang. Da man mit der erfindungsgemäßen Vorrichtung einen sehr kleinen Aufbau des Meßkopfes erreicht, kann man diesen als Schwingungsaufnehmer in ein Mikrofon einbauen, insbesondere in dessen Gehäuse, das auch zu einem Rahmen abgemagert sein kann. Der Laserstrahl nimmt die Schwingungen der Membran auf und man hat am Ausgang der Vibrometer-Elektronik ein sehr sauberes Signal. Der Vorteil liegt darin, daß akustische Signale optisch an der Membran gemessen werden können, so daß die Schwingungseigenschaften der Membran nicht beeinflußt werden.

Besonders genau lassen sich die Membranschwingungen vermessen, wenn man den Meßstrahl in den Strahlengang eines Mikroskops einkoppelt.

Weitere erfindungswesentliche Merkmale und Vorteile ergeben sich aus der Beschreibung eines Ausführungsbeispiels anhand der Zeichnung; dabei zeigt
- Figur 1: den schematischen Aufbau einer Vorrichtung zur berührungslosen Schwingungsmessung; und
- Figur 2: eine Skizze eines Vermessungsverfahrens.

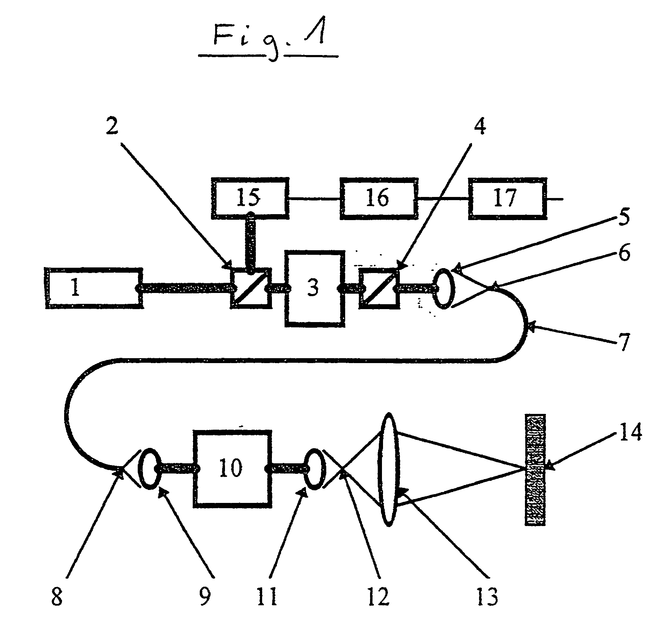

In Figur 1 erkennt man einen Laser 1, dessen kollimierter Lichtstrahl zunächst einen Strahlteiler 2 passiert. Der Strahlteiler 2 dient zum Auskoppeln des zurücklaufenden Meß- und Referenzstrahles für die Detektion und wird in seiner Funktion weiter unten beschrieben. Für ein optimiertes, selektives Auskoppeln der zurücklaufenden Strahlen ist der Strahlteiler vorzugsweise ein Polarisationsstrahlteiler, hinter dem ein Faraday-Rotator 3 und ein Polarisator 4 angeordnet sind. In bestimmten Fällen ist es auch möglich, die zurücklaufenden Strahlen in einem 50:50 Strahlteiler aufzuteilen.

Das so polarisierte Laserlicht wird über ein Linsensystem 5 in ein Eintrittsende 6 eines Lichtleiters 7 eingekoppelt. Der Lichtleiter 7 ist vorzugsweise eine Monomode-Glasfaser. Vom Eintrittsende 6 des Lichtleiters 7 zurückreflektiertes Licht geht verloren oder überlagert sich in unerwünschter Weise mit dem zurücklaufenden Meß- und Referenzstrahl. Deshalb wird das Eintrittsende 6 vorzugsweise so behandelt, daß möglichst wenig Licht zurückreflektiert wird.

Das Licht durchläuft zumindest einen wesentlichen Teil des Lichtleiters 7, bevor es, im dargestellten Ausführungsbeispiel am Austrittsende 8 des Lichtleiters, in Meßstrahl und Referenzstrahl aufgeteilt wird.

Zur Aufteilung reflektiert das Austrittsende 8 des Lichtleiters 7 einen angemessenen Anteil des Laserlichtes in den Lichtleiter 7 zurück. Wesentlich ist dabei, daß der zurückreflektierte Anteil als Referenzstrahl fungiert.

In der Regel beträgt die Intensität des am Glas-Luft-Übergang des Austrittsendes 8 zurückreflektierten Anteils etwa 4 % der Intensität des ankommenden Laserlichtes. In bestimmten Fällen ist es aber empfehlenswert, hier eine zusätzliche Beschichtung des Austrittsendes 8 zu verwenden, um die Intensität des Referenzstrahles zu erhöhen.

Das nicht am Austrittsende 8 zurückreflektierte oder absorbierte Licht fungiert als Meßstrahl. Es tritt aus dem Lichtleiter 7 an dessen Austrittsende 8 aus und wird mittels eines zweiten Linsensystems 9 kollimiert oder nahezu kollimiert und auf ein Mittel 10 zum Erzeugen einer Frequenzverschiebung gelenkt, das als eine Bragg-Zelle ausgeführt ist.

Vom Mittel 10 zum Erzeugen einer Frequenzverschiebung wird der Meßstrahl zu einem dritten Linsensystem 11 reflektiert, das den kollimierten Meßstrahl in einem Punkt 12 fokussiert.

Der Punkt 12 liegt vorzugsweise in der Brennebene eines vierten Linsensystems 13, um die Verwendung einer austauschbaren und fokussierbaren Frontoptik, etwa in Form von Kameraobjektiven, zu ermöglichen.

Vom vierten Linsensystem 13 wird der Meßstrahl schließlich auf das Meßobjekt 14 abgebildet. Somit ergibt sich vom Austrittsende 8 bis zum Meßobjekt 14 ein möglichst kurzer Meßarm für den hinlaufenden Meßstrahl.

Der Meßstrahl wird vom Meßobjekt 14 reflektiert und erfährt dabei eine Dopplerfrequenzverschiebung, die zu der momentanen Geschwindigkeit der Oberfläche des Meßobjektes 14 in Strahlrichtung proportional ist. Der zurückreflektierte Meßstrahl durchläuft den umgekehrten Weg des hinlaufenden Meßstrahles. Er wird also über die Linsensysteme 13, 11, das Mittel 10 zum Erzeugen einer Frequenzverschiebung und das Linsensystem 9 in das Austrittsende 8 des Lichtleiters 7 eingekoppelt.

Wesentlich ist nun, daß er dabei ein zweites Mal mit dem Mittel zum Erzeugen einer Frequenzverschiebung wechselwirkt, wobei er eine zweite, gleichgerichtete, zusätzliche Frequenzverschiebung erfährt.

Der Meßkopf enthält im dargestellten Ausführungsbeispiel das Austrittsende 8, das zweite Linsensystem 9, das Mittel 10 zum Erzeugen einer Frequenzverschlebung, das dritte Linsensystem 11, und das vierte Linsensystem 13. Die Aufteilung in Meßstrahl und Referenzstrahl erfolgt also im Meßkopf. Durch die Aufteilung am Austrittsende 8 des Lichtwellenleiters 7 erübrigt sich der sonst notwendige Strahlteiler und der Meßkopf baut entsprechend klein. Justierarbeiten im Meßkopf sind praktisch eliminiert.

Falls die Arbeitsentfernung vom Meßkopf zum Meßobjekt 14 genügend klein ist und nicht verändert wird, kann auch das zweite Linsensystem 9 zur Fokussierung verwendet werden. So lassen sich das dritte und das vierte Linsensystem 11, 13 und die dadurch verursachten Kosten sparen.

Der Meßstrahl wird nun im Lichtleiter 7, also auf dem gleichen Pfad wie der Referenzstrahl, zurückgeführt. Dadurch wird der Lichtleiter 7 auch bezüglich der Rückführung von Meß- und Referenzstrahl unempfindlich gegen Erschütterungen und Vibrationen. Vom Eintrittsende 6 des Lichtleiters 7 werden Meß- und Referenzstrahl in Richtung des Strahlteilers 2 projiziert. Durch den Faraday-Rotator 3 ist die Polarisationsebene des Meßund Referenzstrahles auf Hin- und Rückweg so gedreht worden, daß die zurücklaufenden Strahlen bei geeigneter Einstellung des Polarisationsstrahlteilers 2 vollständig zum Detektor 15 gelenkt und nicht in den Laser 1 rückgekoppelt werden.

Im Falle eines intensitätsstarken Helium-Neon-Lasers kann auf das Isolatorsystem aus teurem Faraday-Rotator 3 und Polarisator 4 verzichtet werden. Der Strahlteiler 2 wird in diesem Fall durch einen 50:50 Strahlteiler ersetzt. Jeweils 50 % des gesendeten und empfangenen Lichtes gehen dann verloren.

Das sich durch die Schwingungen des Meßobjektes 14 verändernde Interferenzmuster von Meß- und Referenzstrahl äußert sich am Detektor 15 als Intensitätsmodulation des ankommenden Lichtes. Die Frequenz der Intensitätsmodulation ist durch die Summe der doppelten, durch die Bragg-Zelle 10 erzeugten Frequenzverschiebung und der Doppler-Verschiebung durch die Geschwindigkeit des Meßobjektes 14 gegeben. Dieses optische Signal wird vom Detektor 15 in ein elektrisches Signal umgewandelt und mittels einer Vorverarbeitungsstufe 16 gefiltert und verstärkt. Das so erzeugte Signal wird dann mittels einer Demodulationselektronik 17 in bekannter Weise in ein Signal umgewandelt, das die Vibrationsgeschwindigkeit bzw. die Amplitude des Meßobjektes charakterisiert.

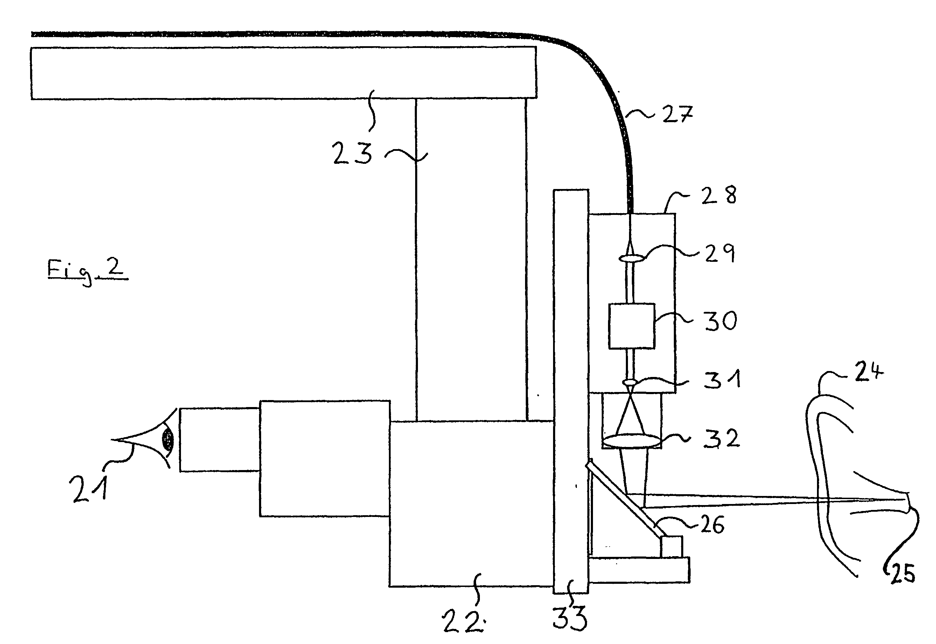

In Figur 2 ist ein Verfahren zur optischen Vermessung eines Objektes skizziert. Dabei schaut ein Betrachter 21, in der Regel der Arzt bei der Operation, durch ein Operationsmikroskop 22, das an einer Mikroskopaufhängung 23 sehr frei beweglich ist. Er kann durch dieses Mikroskop 22 den Operationsverlauf beobachten und dabei auch sehr kleine Details genau kontrollieren. Dies ist insbesondere für Operationen im Kopfbereich, zum Beispiel am Ohr 24, wichtig. Empfindliche Körperteile wie das Trommelfell 25 oder andere Teile des Mittelohres lassen sich überhaupt nur so erfolgreich operieren.

Wesentlich ist nun, daß der Meßstrahl eines Laserinterferometers in den Strahlengang des Operationsmikroskopes 22 eingekoppelt wird. Dadurch kann an einem durch das Mikroskop sichtbaren Objekt eine Weg- und/oder Schwingungsmessung vorgenommen werden, wobei es sogar möglich ist, den Meßpunkt im Mikroskop zu sehen und ihn somit exakt zu positionieren.

Bei dem Objekt handelt es sich entweder um ein Implantat oder um das Trommelfell bzw. ein anderes zu vermessendes Körperteil. Durch die Wegund/oder Schwingungsmessung kann der optimale Einbauort des implantates gefunden werden. Dazu wird das Ohr zum Beispiel durch Schall oder direkte mechanische Erregung zu Schwingungen angeregt. Dann wird das Implantat so positioniert, daß es seinerseits eine vorgegebene, gewünschte Schwingungsamplitude aufweist. Alternativ zur Vermessung des Implantates können auch die Schwingungen des Trommelfells oder eines anderen Körperteils gemessen und aus der Änderung des Schwingungsverhaltens auf den korrekten Einbauort des Implantates geschlossen werden.

Das Einkoppeln des Meßstrahles in den Strahlengang des Operationsmikroskopes 22 erfolgt im dargestellten Ausführungsbeispiel über einen Strahlteiler 26. Der Meßstrahl wird von einem nicht dargestellten Laser erzeugt und über einen Lichtleiter 27 zu einem Meßkopf 28 geleitet.

Im Meßkopf 28 tritt der Meßstrahl aus dem Lichtleiter 27 aus und verläuft über eine Kollimatorlinse 29 zu einer Bragg-Zelle 30. An der Bragg-Zelle 30 wird der Meßstrahl frequenzverschoben und vorzugsweise über zwei weitere Linsen 31 und 32 unter Umlenkung durch den Strahlteiler 26 oder einen Spiegelstab auf das zu vermessende Objekt fokussiert.

Der Meßstrahl wird zwischen Operationsmikroskop 22 und Objekt 25 in den Strahlengang des Operationsmikroskopes 22 eingekoppelt. Dazu ist am Operationsmikroskop 22 ein Halter 33 befestigt, der den Meßkopf 28 und den Strahlteiler oder Spiegelstab 26 trägt. Der Lichtleiter 27 ist entlang der Mikroskop-aufhängung 23 verlegt.

Alternativ zur in Figur 2 dargestellten Fokussierung des Meßstrahles auf das Trommelfell 25 kann dieser zum Beispiel durch eine Operationsöffnung im Kopf direkt auf das Implantat fokussiert werden.

Das Verfahren läßt sich wegen der normalerweise sehr geringen Reflexifität von Körperteilen und Implantaten und der großen Länge des zu verwendenden Lichtleiters 27 besonders gut mit der zuvor beschriebenen erfindungsgemäßen Vorrichtung durchführen.

## Patentansprüche

1. Laserinterferometer zur berührungslosen, optischen Vermessung eines Objektes (14), insbesondere zur Weg- und/oder Schwingungsmessung, mit mindestens einem Messstrahl und mindestens einem Referenzstrahl, wobei das Interferometer ein Mittel (10) zum Erzeugen einer zeitlich konstanten Frequenzverschiebung aufweist,
wobei der vom Laser (1) ausgehende Strahl einen Lichtleiter (7) durchläuft, und
wobei die Aufteilung in Messstrahl und Referenzstrahl am Austrittsende (8) des Lichtleiters (7) erfolgt, **dadurch gekennzeichnet,**
**dass** entweder der Mess- oder der Referenzstrahl das Mittel (10) zum Erzeugen der zeitlich konstanten Frequenzverschiebung mindestens zweimal durchläuft, so dass die Frequenzverschiebung des Strahles vergrößert wird.

2. Vorrichtung nach Anspruch 1,
**dadurch gekennzeichnet,**
**daß** der in seiner Frequenz verschobene Strahl der Meßstrahl ist.

3. Vorrichtung nach Anspruch 2,
**dadurch gekennzeichnet,**
**daß** der Strahl das erste Mal auf seinem Weg zum Meßobjekt (14) das Mittel (10) zum Erzeugen der Frequenzverschiebung durchläuft, und ein weiteres Mal auf seinem Rückweg.

4. Vorrichtung nach Anspruch 1,
**dadurch gekennzeichnet,**
**daß** das Mittel zum Erzeugen einer Frequenzverschiebung zwischen Lichtleiter (7) und Meßobjekt (14) angeordnet ist.

5. Vorrichtung nach Anspruch 1,
**dadurch gekennzeichnet,**
**daß** das Austrittsende (8) des Lichtleiters (7) in einem Meßkopf (8, 9, 10, 11, 12 und 13) angeordnet ist.

6. Vorrichtung nach Anspruch 1,
**dadurch gekennzeichnet,**
**daß** der Lichtleiter (7) zur gemeinsamen Führung von Meß- und Referenzstrahl zu einem Detektor (15) dient.

7. Vorrichtung nach Anspruch 1,
**dadurch gekennzeichnet,**
**daß** Meß- und Referenzstrahl den Lichtleiter (7) etwa in der gleichen Polarisation, insbesondere in gleicher Ausrichtung linear polarisiert, durchlaufen.

8. Vorrichtung nach Anspruch 1,
**dadurch gekennzeichnet,**
**daß** an ihr mehrere Meßköpfe anschließbar sind.

9. Vorrichtung nach Anspruch 1,
**dadurch gekennzeichnet,**
**daß** sie eine Zuordnungseinrichtung zum Einkoppeln des Laserlichtes in unterschiedliche Lichtleiter aufweist.

10. Vorrichtung nach Anspruch 1,
**dadurch gekennzeichnet,**
**daß** sie zumindest mit ihrem Lichtaustrittsende in ein Mikrophongehäuse eingebaut ist und zur Vermessung der Mikrophonmembran dient.

## Claims

1. Laser interferometer for contactless optical measurement of an object (14), especially for measuring displacement and/or vibration, having at least one measuring beam and at least one reference beam, the interferometer having a means (10) for generating a temporally constant frequency shift, wherein the beam leaving the laser (1) passes through a photoconductor (7), and
wherein the division into measuring beam and reference beam takes place at the outlet end (8) of the photoconductor (7),
**characterised in that**
either the measuring beam or the reference beam passes at least twice through the means (10) for generating the temporally constant frequency shift, so that the frequency shift of the beam is increased.

2. Device according to claim 1,
**characterised in that**
the frequency-shifted beam is the measuring beam.

3. Device according to claim 2,
**characterised in that**
the beam passes through the means (10) for generating the frequency shift the first time on its way to the object (14) being measured and a further time on its return path.

4. Device according to claim 1,
**characterised in that**
the means for generating a frequency shift is arranged between the photoconductor (7) and the object (14) being measured.

5. Device according to claim 1,
**characterised in that**
the outlet end (8) of the photoconductor (7) is arranged in a measuring head (8, 9, 10, 11, 12 and 13).

6. Device according to claim 1,
**characterised in that**
the photoconductor (7) serves for the common guidance of the measuring and reference beams to a detector (15).

7. Device according to claim 1,
**characterised in that**
measuring and reference beams pass through the photoconductor (7) approximately in the same polarisation, especially linearly polarised in the same orientation.

8. Device according to claim 1,
**characterised in that**
a plurality of measuring heads can be connected thereto.

9. Device according to claim 1,
**characterised in that**
it has an allocation device for coupling the laser light into different photoconductors.

10. Device according to claim 1,
**characterised in that**
it is installed, at least by means of its light-outlet end, in a microphone housing and is used for measuring the microphone diaphragm.

## Revendications

1. Interféromètre laser pour le mesurage optique d'un objet (14), en particulier pour la mesure de distances et/ou de vibrations, avec au moins un faisceau de mesure et au moins un faisceau de référence, l'interféromètre présentant un moyen (10) de génération d'un décalage de fréquence constant dans le temps, le faisceau sortant du laser (1) traversant un guide de lumière (7) et la séparation en faisceau de mesure et faisceau de référence étant effectuée à l'extrémité de sortie (8) du guide de lumière (7),
**caractérisé par le fait que** soit le faisceau de mesure, soit le faisceau de référence traverse au moins deux fois le moyen (10) de génération du décalage de fréquence constant dans le temps, de sorte que le décalage de fréquence du faisceau augmente.

2. Dispositif selon la revendication 1,
**caractérisé par le fait**
**que** le faisceau dont la fréquence est décalée est le faisceau de mesure.

3. Dispositif selon la revendication 2,
**caractérisé par le fait**
**que** le faisceau traverse le moyen (10) de génération du décalage de fréquence une première fois sur son chemin vers l'objet à mesurer (14) et une deuxième fois sur son chemin de retour.

4. Dispositif selon la revendication 1,
**caractérisé par le fait**
**que** le moyen de génération d'un décalage de fréquence est placé entre le guide de lumière (7) et l'objet à mesurer (14).

5. Dispositif selon la revendication 1,
**caractérisé par le fait**
**que** l'extrémité de sortie (8) du guide de lumière (7) est placée dans une tête de mesure (8, 9, 10, 11, 12 et 13).

6. Dispositif selon la revendication 1,
**caractérisé par le fait**
**que** le guide de lumière (7) sert au guidage commun du faisceau de mesure et du faisceau de référence vers un détecteur (15).

7. Dispositif selon la revendication 1,
**caractérisé par le fait**
**que** le faisceau de mesure et le faisceau de référence traversent le guide de lumière (7) à peu près avec la même polarisation, en particulier avec une polarisation linéaire de même orientation.

8. Dispositif selon la revendication 1,
**caractérisé par le fait**
**que** plusieurs têtes de mesure peuvent y être raccordées.

9. Dispositif selon la revendication 1,
**caractérisé par le fait**
**qu'**il présente un dispositif d'affectation pour injecter la lumière laser dans différents guides de lumière.

10. Dispositif selon la revendication 1,
**caractérisé par le fait**
**qu'**il est logé au moins avec son extrémité de sortie de la lumière dans un boîtier de microphone et qu'il sert à la mesure de la membrane du microphone.
